# EUROPÄISCHE PATENTANMELDUNG

(11) **EP 4 066 975 A1**
(43) Veröffentlichungstag der Anmeldung: **05.10.2022**
(21) Anmeldenummer: 22158927.8
(22) Anmeldetag: 25.02.2022
(51) Int. Cl.: B23F 21/10, B23F 21/28, B23F 5/16

(54) **WALZSCHÄLWERKZEUG UND VERFAHREN ZUM WALZSCHÄLBEARBEITEN EINES ZAHNRADROHLINGS**

(30) Priorität: 01.04.2021 DE 102021108379
(71) Anmelder: Präwema Antriebstechnik GmbH, 37269 Eschwege/Werra (DE)
(72) Erfinder: Schiecke, Jörg, 99092 Erfurt-Marbach (DE); Holderbein, Walter, 37269 Eschwege (DE); Reinhardt, Jörg, 99826 Berka v.d.H. (DE)
(74) Vertreter: Cohausz & Florack

(57) **Zusammenfassung**

Die Erfindung betrifft ein Wälzschälwerkzeug (1), das als Einwegwerkzeug ausgeführt ist und das eine erste Stirnseite (2), eine zweite Stirnseite (3), eine an seinem Umfang ausgebildete Verzahnung (4) mit Zähnen (5), bei denen die der ersten Stirnseite (2) zugeordneten Stirnflächen (6) jeweils durch eine erste Schneidkante (9,10) begrenzt sind, sowie eine Koppeleinrichtung (14) zum Ankoppeln des Wälzschälwerkzeugs (1) an eine Werkzeugspindel einer Wälzschälmaschine umfasst. Um bei einem solchen Wälzschälwerkzeug (1) eine verlängerte Nutzung zu ermöglichen, sieht die Erfindung vor, dass das Wälzschälwerkzeug (1) die Grundform einer zylindrischen Scheibe aufweist, dass die der zweiten Stirnseite (3) zugeordneten Stirnflächen der Zähne (5) durch jeweils eine zweite Schneidkante (12,13) begrenzt sind, und dass die Koppeleinrichtung (14) zum Gebrauch sowohl ein Ankoppeln des Wälzschälwerkzeugs (1) an die Werkzeugspindel derart ermöglicht, dass die seiner ersten Stirnseite (2) zugeordneten Schneidkanten (9,10) mit dem zu bearbeitenden Zahnrad in Eingriff kommen, als auch ein Ankoppeln des Wälzschälwerkzeugs (1) an die Werkzeugspindel derart ermöglicht, dass die seiner zweiten Stirnseite (3) zugeordneten Schneidkanten (12,13) mit dem zu bearbeitenden Zahnrad in Eingriff kommen. Im Gebrauch wird das Wälzschälwerkzeug (1), wenn die ersten Schneidkanten (9,10) ihre Verschleißgrenze erreicht haben, gewendet und die Wälzschälbearbeitung mit demselben Wälzschälwerkzeug (1) fortgesetzt, bis auch die zweiten Schneidkanten (12,13) ihre Verschleißgrenze erreicht haben.

## Beschreibung

Die Erfindung betrifft ein Wälzschälwerkzeug. Das Wälzschälwerkzeug ist als Einwegwerkzeug ausgeführt und umfasst eine erste Stirnseite und eine zweite Stirnseite, sowie eine Koppeleinrichtung zum Ankoppeln des Wälzschälwerkzeugs an einen Werkzeugantrieb einer Wälzschälmaschine. Gleichzeitig weist das Wälzschälwerkzeug eine an seinem Umfang ausgebildete Verzahnung mit Zähnen auf. Die Zähne besitzen jeweils eine Schneidkante, welche im Gebrauch in spanabhebenden Eingriff mit einem zu bearbeitenden Zahnradwerkstück kommt.

Ebenso betrifft die Erfindung ein Verfahren zum Wälzschälbearbeiten eines Zahnradrohlings unter Verwendung eines solchen Wälzschälwerkzeugs.

Beim Wälzschälen handelt es sich um ein kontinuierliches spanabhebendes Verfahren, bei dem Wälzfräsen und Stoßen durch kontinuierliches Abwälzen mit axialem Vorschub vereint sind. Hieraus ergibt sich eine besondere Wirtschaftlichkeit des Wälzschälens, die es ermöglicht, Zahnräder in deutlich verkürzter Bearbeitungszeit herzustellen. Charakteristisch für das Wälzschälen ist dabei die schräge Anordnung der Achsen von Werkzeug und Werkstück, aufgrund derer sich die Drehachsen von Werkzeug und Werkstück unter einem so genannten Achskreuzwinkel schneiden. Durch die gekreuzte Achsanordnung entsteht eine Relativgeschwindigkeit zwischen Werkzeug und Werkstück. Diese Relativbewegung wird als Schnittbewegung ausgenutzt, deren Hauptschnittrichtung entlang der Zahnlücke des Werkstücks ausgerichtet ist.

Die Größe der Schnittgeschwindigkeit ist von der Größe des Achskreuzwinkels und von der Drehzahl der Bearbeitungsspindeln abhängig (s. Broschüre "Wälzschälen - Power Skiving", Ausgabe 08/2014, herausgegeben von der Anmelderin und unter der URL "http://praewema.dvs-gruppe.com/uploads/tx_xpctypedownloadssimple/PRW_Power_Skiving.pdf", Auffindedatum 31. März 2021, zum Download bereitgestellt).

Die für das Wälzschälen eingesetzten Werkzeuge unterliegen naturgemäß Verschleiß, aufgrund dessen sie nach einer gewissen Verwendungsdauer ersetzt werden müssen. In der Praxis werden daher solche Wälzschälwerkzeuge, die als Einwegwerkzeuge ausgeführt sind, und solche Wälzschälwerkzeuge verwendet, die als Mehrwegwerkzeug ausgeführt sind. Mehrwegwerkzeuge haben den Vorteil, dass sie, nachdem sie ihre Verschleißgrenze erreicht haben, mehrfach für eine erneute Verwendung aufbereitet werden können und somit die Anforderungen an eine nachhaltige Ressourcennutzung erfüllen. Für diese Möglichkeit müssen jedoch höhere Anschaffungskosten und die Kosten für die Aufbereitung in Kauf genommen werden. Einwegwerkzeuge sind preisgünstiger, sind jedoch nach Erreichen der Verschleißgrenze nicht mehr nutzbar und müssen daher entsorgt werden.

Vor diesem Hintergrund hat sich die Aufgabe ergeben, ein Wälzschälwerkzeug und ein Verfahren zum Wälzschälbearbeiten eines Zahnradrohlings zu nennen, die eine verlängerte Nutzung auch von als Einwegwerkzeug gestalteten Wälzschälwerkzeugen ermöglichen.

Die Erfindung hat diese Aufgabe durch ein Wälzschälwerkzeug, das mindestens die in Anspruch 1 angegebenen Merkmale aufweist, und ein Verfahren gelöst, das mindestens die in Anspruch 9 angegebenen Arbeitsschritte umfasst.

Vorteilhafte Ausgestaltungen der Erfindung sind in den abhängigen Ansprüchen angegeben und werden wie der allgemeine Erfindungsgedanke nachfolgend im Einzelnen erläutert.

Dabei versteht es sich von selbst, dass in Bezug auf das erfindungsgemäße Verfahren hier nur die Arbeitsschritte erwähnt sind, die zur Erläuterung der Besonderheiten der Erfindung und der dadurch erzielten Effekte benötigt werden, und dass dabei unterstellt wird, dass der Fachmann bei der Durchführung des erfindungsgemäßen Verfahrens die Arbeitsschritte selbstständig ergänzt, die er beim Wälzschälbearbeiten von Zahnradrohlingen in seiner täglichen Praxis üblicherweise ausführt.

In Übereinstimmung mit dem eingangs erläuterten Stand der Technik ist ein erfindungsgemäßes Wälzschälwerkzeug als Einwegwerkzeug ausgeführt und umfasst eine erste Stirnseite, eine zweite Stirnseite, eine an seinem Umfang ausgebildete Verzahnung mit Zähnen, bei denen die der ersten Stirnseite zugeordneten Stirnflächen jeweils durch eine erste Schneidkante begrenzt sind, welche im Gebrauch in spanabhebenden Eingriff mit einem zu bearbeitenden Zahnrad kommt, sowie eine Koppeleinrichtung zum Ankoppeln des Wälzschälwerkzeugs an eine Werkzeugspindel einer Wälzschälmaschine.

Erfindungsgemäß weist dabei das Wälzschälwerkzeug die Grundform einer zylindrischen Scheibe auf.

Des Weiteren sind bei einem erfindungsgemäßen Wälzschälwerkzeug die der zweiten Stirnseite zugeordnete Stirnflächen der Zähne der Verzahnung durch jeweils eine zweite Schneidkante begrenzt.

Schließlich ermöglicht die Koppeleinrichtung eines erfindungsgemäßen Wälzschälwerkzeugs zum Gebrauch sowohl ein Ankoppeln des Wälzschälwerkzeugs an die Werkzeugspindel der jeweiligen Wälzschälmaschine derart, dass im Gebrauch die seiner ersten Stirnseite zugeordneten Schneidkanten seiner Zähne mit dem zu bearbeitenden Zahnrad in Eingriff kommen, als auch ein Ankoppeln des Wälzschälwerkzeugs an die Werkzeugspindel derart ermöglicht, dass im Gebrauch die seiner zweiten Stirnseite zugeordneten Schneidkanten seiner Zähne mit dem zu bearbeitenden Zahnrad in Eingriff kommen.

Ein erfindungsgemäßes Wälzschälwerkzeug ist somit nach Art eines Wendewerkzeugs ausgeführt, das in zwei Positionen an der Werkzeugspindel einer Wälzschälmaschine befestigt werden kann.

Hierzu hat ein erfindungsgemäßes Werkzeug zwei identisch ausgeführte Bearbeitungsseiten, nämlich die erste und die zweite Stirnseite, an denen jeweils Schneiden vorgesehen sind, mit denen jeweils die Wälzschälbearbeitung durchgeführt werden kann. Gleichzeitig ist die Koppeleinrichtung so ausgeführt, dass ein erfindungsgemäßes Wälzschälwerkzeug für den Wälzschäleinsatz in beliebiger Zuordnung seiner mit den Schneidflächen versehenen Stirnseiten an einer Werkzeugaufnahme der jeweiligen Wälzschälmaschine befestigt werden kann.

Dies erlaubt es, ein erfindungsgemäßes Wälzschälwerkzeug, nachdem es das Ende seiner Standzeit erreicht hat und aufgrund von Verschleiß keine ordnungsgemäße Bearbeitung des jeweiligen Werkstücks ermöglicht, zu wenden und anschließend erneut für die Wälzschälbearbeitung einzusetzen.

Ein erfindungsgemäßes Verfahren zum Wälzschälbearbeiten eines Zahnradrohlings umfasst demgemäß folgende Arbeitsschritte:
a) Bereitstellen eines gemäß einem der Ansprüche 1 bis 7 ausgebildeten Wälzschälwerkzeugs;
b) Ankoppeln des Wälzschälwerkzeugs an eine Werkzeugspindel einer Wälzschälmaschine derart, dass bei der nachfolgend durchgeführten Wälzschälbearbeitung (Arbeitsschritt c)) die der ersten Stirnseite des Wälzschälwerkzeugs zugeordneten ersten Schneidkanten des Wälzschälwerkzeugs mit dem jeweils zu bearbeitenden Zahnradrohling in Eingriff kommen;
c) Wälzschälbearbeiten von Zahnradrohlingen bis die ersten Schneidkanten des Wälzschälwerkzeugs in Folge von Verschleiß einen Grenzzustand erreicht haben;
d) Abkoppeln des Wälzschälwerkzeugs von der Werkzeugspindel;
e) Wenden des Wälzschälwerkzeugs und Ankoppeln des Wälzschälwerkzeugs an die Werkzeugspindel der Wälzschälmaschine derart, dass bei der nachfolgend durchgeführten Wälzschälbearbeitung (Arbeitsschritt f)) die der zweiten Stirnseite des Wälzschälwerkzeugs zugeordneten zweiten Schneidkanten des Wälzschälwerkzeugs mit dem jeweils zu bearbeitenden Zahnradrohling in Eingriff kommen;
f) Wälzschälbearbeiten von Zahnradrohlingen bis die zweiten Schneidkanten des Wälzschälwerkzeugs in Folge von Verschleiß einen Grenzzustand erreicht haben.

Mit der Erfindung stehen somit ein Wälzschälwerkzeug und Verfahren zum Wälzschälen zur Verfügung, mit denen eine Verdopplung der Nutzungsdauer auch solcher Wälzschälwerkzeuge gelingt, die als Einwegwerkzeuge ausgeführt sind. Die durch die erfindungsgemäße Ausgestaltung gegenüber der Herstellung konventioneller Einweg-Wälzschälwerkzeuge anfallenden Kosten sind minimal, da bei der Herstellung der erfindungsgemäßen Wälzschälwerkzeuge bis auf die Erzeugung der Schneiden an den zweiten Stirnseiten der Zähne des Werkzeugs gegenüber der Herstellung konventioneller Einweg-Wälzschälwerkzeuge kein nennenswerter zusätzlicher Aufwand anfällt.

Dies gelingt der Erfindung dadurch, dass das Wälzschälwerkzeug die Grundgestalt einer Zylinderscheibe aufweist, das heißt derart geformt ist, dass seine Umhüllende ein Zylinder ist.

Eine besonders einfache, die Wendbarkeit ermöglichende Gestaltung eines erfindungsgemäßen Wälzschälwerkzeugs ergibt sich dann, wenn die Verzahnung des erfindungsgemäßen Wälzschälwerkzeugs als Geradverzahnung mit einem symmetrischen Profil ausgebildet ist. Die Zähne der Verzahnung des Wälzschälwerkzeugs weisen dann ein Profil auf, das sowohl in Bezug auf die normal zur Drehachse ausgerichtete Mittelebene des Wälzschälwerkzeugs als auch zur Zahnmitte ein symmetrisch ausgebildetes Profil besitzt.

Ein erfindungsgemäßes Einwegwerkzeug besteht beispielsweise aus einem pulvermetallurgisch hergestellten, für derartige Anwendungen im Stand der Technik bereits eingesetzten Schnellarbeitsstahl, in der Praxis auch als "PM-HSS" oder "HSS-PM" bezeichnet, oder aus einem ebenfalls für derartige Anwendungen in der Praxis bereits verwendeten Hartmetallwerkstoff.

Eine für die Praxis besonders wichtige Ausgestaltung der Erfindung ist dabei dadurch gekennzeichnet, dass die Zahnkopfbreite der Zähne der Verzahnung eines erfindungsgemäßen Wälzschälwerkzeugs 2 - 20 mm beträgt. Für die Praxis besonders geeignete erfindungsgemäße Wälzschälwerkzeuge weisen hier eine Zahnkopfbreite der Zähne ihrer Verzahnung von 4 - 7 mm auf.

Die Spanflächen der Schneiden sind bevorzugt im Kegelmantelschliff geformt, um einen optimalen Abfluss der bei der Wälzschälbearbeitung entstehenden Späne zu erreichen.

Die bei einem erfindungsgemäßen Wälzschälwerkzeug vorgesehene, eine Befestigung unabhängig von einer speziellen Ausrichtung der Stirnseiten des Werkzeugs ermöglichende Koppeleinrichtung kann durch eine sich von der ersten Stirnseite zur zweiten Stirnseite erstreckende Durchgangsöffnung gebildet sein. Dabei ist mit Blick auf die Wendbarkeit praktischerweise ein der ersten Stirnseite zugeordneter Mündungsbereich bezogen auf eine normal zur Längsachse des Wälzschälwerkzeugs und bezogen auf die parallel zur Längsachse des Wälzschälwerkzeugs gemessene Breite des Wälzschälwerkzeugs mittig ausgerichtete Mittelebene spiegelsymmetrisch zu einem der zweiten Stirnseite zugeordneten Mündungsbereich der Durchgangsöffnung ausgebildet. Zusätzlich kann zum verdrehsicheren Ankoppeln an die Werkzeugaufnahme der Werkzeugspindel der jeweiligen Werkzeugmaschine an einer Innenfläche der Durchgangsöffnung ein Formelement zum formschlüssigen und drehfesten Ankoppeln des Wälzschälwerkzeugs an den Werkzeugantrieb vorgesehen sein.

Nachfolgend wird die Erfindung anhand einer ein Ausführungsbeispiel darstellenden Zeichnung näher erläutert. Es zeigen jeweils schematisch:

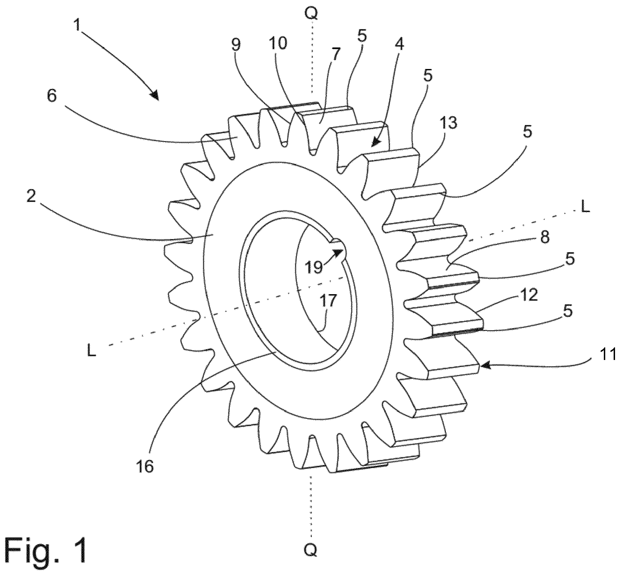

- Fig. 1: ein Wälzschälwerkzeug in perspektivischer Ansicht;

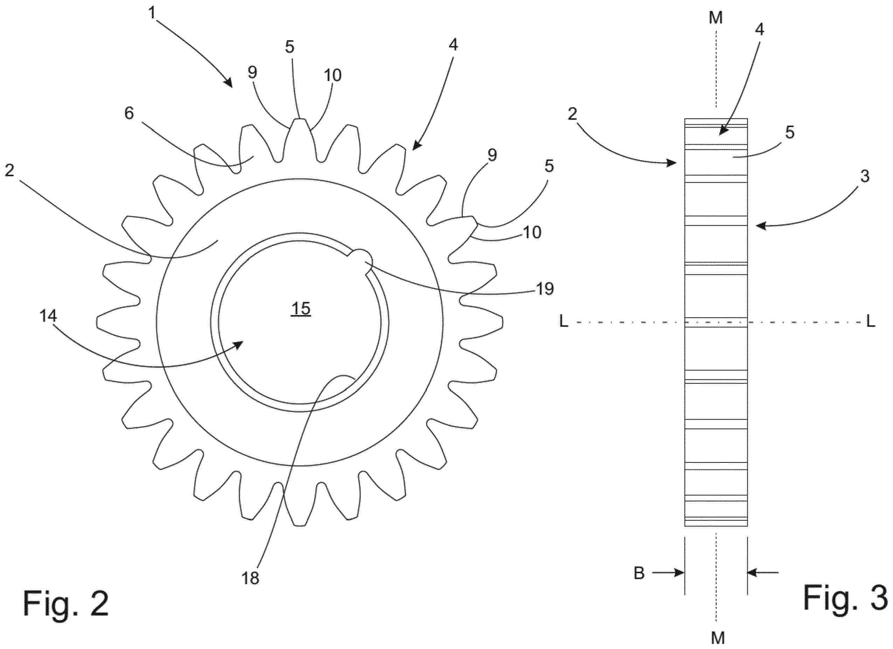

- Fig. 2: das Wälzschälwerkzeug in einer frontalen Ansicht;
- Fig. 3: das Wälzschälwerkzeug in seiner seitlichen Ansicht.

Das aus PM-HSS bestehende Wälzschälwerkzeug 1 weist die Grundform einer Zylinderscheibe auf und besitzt eine erste Stirnseite 2 und eine dazu gegenüberliegende zweite Stirnseite 3.

Am Umfang des Wälzschälwerkzeugs 1 ist eine Außenverzahnung 4 mit Zähnen 5 ausgebildet, die in regelmäßiger Teilung um die im Gebrauch mit der Drehachse des Wälzschälwerkzeugs 1 zusammen fallende zentrale Achse L herum verteilt angeordnet sind. Selbstverständlich wäre es ebenso möglich, die Zähne des Wälzschälwerkzeugs 1 in einer unregelmäßigen Teilung anzuordnen, wenn dies erforderlich wäre, um die am jeweiligen Zahnrohling zu erzeugende Verzahnung herzustellen.

Die Zähne 5 sind dabei geradverzahnt und weisen ein in Bezug auf die normal zur Achse L ausgerichtete Mittelebene M des Wälzschälwerkzeugs 1 und die Zahnmitte der Zähne 5 ein symmetrisch ausgebildetes Profil auf.

Die Kanten, an denen die der ersten Stirnseite 2 des Wälzschälwerkzeugs 1 zugeordneten Stirnflächen 6 der Zähne 5 der Außenverzahnung 4 mit den Zahnflanken 7,8 des jeweiligen Zahns 5 zusammentreffen, sind als erste Schneidkanten 9,10 ausgebildet.

Genauso sind die Kanten, an denen die der zweiten Stirnseite 3 des Wälzschälwerkzeugs 1 zugeordneten Stirnflächen 11 der Zähne 5 der Außenverzahnung 4 mit den Zahnflanken 7,8 des jeweiligen Zahns 5 zusammentreffen, als zweite Schneidkanten 12,13 ausgebildet.

Abhängig davon, welche der Stirnseiten 2,3 im Gebrauch dem zu bearbeitenden, hier nicht dargestellten Zahnradrohling zugewandt ist, kommt jeweils eine der Schneidkanten 9,10;12,13 mit dem Material des zu bearbeitenden Zahnrads in Eingriff und trägt dieses ab. Aufgrund der symmetrischen Gestalt der Zähne 5 erzeugen dabei alle Schneidkanten 9,10; 12,13 dieselbe Gestalt an den Zähnen des bearbeiteten Zahnradrohlings.

Die Breite B der Zahnköpfe der Zähne 5 des Wälzschälwerkzeugs 1 beträgt beim hier beschriebenen Beispiel 6 mm.

Um die Ankopplung an die Spindel einer hier ebenfalls nicht gezeigten Werkzeugspindel einer Wälzschälmaschine unabhängig davon zu ermöglichen, welche der Stirnseiten 2,3 des Wälzschälwerkzeugs 1 dem jeweils zu wälzschälzubearbeitenden Zahnradrohling zugewandt ist, weist das Wälzschälwerkzeug 1 eine Koppeleinrichtung 14 auf. Diese ist durch eine zentrale Durchgangsöffnung 15 gebildet, die eine gleichmäßig zylindrische Grundform besitzt und deren an die Stirnseiten 2,3 angrenzenden Mündungsbereiche 16,17 jeweils spiegelsymmetrisch zur normal zur Achse L ausgerichteten Mittelebene M des Wälzschälwerkzeugs 1 geformt sind. Dabei ist in die Innenumfangsfläche 18 der Durchgangsöffnung 15 eine Ausnehmung 19 als Formelement zur drehfesten Ankopplung eingeformt, die sich in bezogen auf die Achse L achsparalleler Ausrichtung von der ersten Stirnseite 2 bis zur zweiten Stirnseite 3 des Wälzschälwerkzeugs 1 erstreckt. In die Ausnehmung 19 greift im Gebrauch ein korrespondierend geformter Vorsprung der hier nicht dargestellten Werkzeugspindel der Wälzschälmaschine ein, so dass eine sichere drehfeste Verkopplung von Wälzschälwerkzeug 1 und Werkzeugspindel gewährleistet ist.

Zum Gebrauch wird das Wälzschälwerkzeug 1 im Neuzustand beispielsweise so auf der Werkzeugspindel der Wälzschälmaschine angeordnet, dass seine erste Stirnseite 2 dem jeweils zu bearbeitenden Zahnradrohling zugeordnet ist und die Wälzschälbearbeitung mit den der ersten Stirnseite 2 zugeordneten ersten Schneidkanten 9,10 erfolgt. Diese Bearbeitung wird fortgesetzt, bis nach einer gewissen Anzahl von wälzschälbearbeiteten Zahnradrohlingen die ersten Schneidkanten 9,10 einen Grenzzustand erreicht haben, bei dem sie durch Verschleiß so stark abgenutzt sind, dass mit ihnen kein den jeweiligen Anforderungen genügendes, ordnungsgemäßes Wälzschälergebnis mehr erzielt wird.

Ist dieser Zustand erreicht, wird das Wälzschälwerkzeug 1 von der Werkzeugspindel der Werkzeugmaschine abgekoppelt und um eine quer zur Achse L ausgerichtete Achse Q so gewendet, dass seine Stirnseite 3 dem jeweils zur Bearbeitung anstehenden Zahnradrohling zugeordnet ist. In dieser Ausrichtung wird das Wälzschälwerkzeug 1 wieder auf die Spindel der Wälzschälmaschine aufgeschoben und dort befestigt.

Genauso wie beim ersten Durchgang, bei dem die Stirnseite 2 dem jeweils zu bearbeitenden Zahnradrohling zugeordnet war, stellt dabei der in die Ausnehmung 19 greifende, hier nicht dargestellte Vorsprung der Werkzeugspindel die drehfeste Ankopplung des Wälzschälwerkzeugs 1 sicher.

Bei der nun einsetzenden Wälzschälbearbeitung erfolgt der Materialabtrag durch die der zweiten Stirnseite 3 zugeordneten zweiten Schneidkanten 12,13 des Wälzschälwerkzeugs 1.

Haben auch diese Schneidkanten 12,13 ihre Verschleißgrenze erreicht, wird das Wälzschälwerkzeug 1 von der Werkzeugspindel der Wälzschälmaschine abgekoppelt und durch ein gleichartiges neues Wälzschälwerkzeug ersetzt.

Somit betrifft die Erfindung ein Wälzschälwerkzeug 1, das als Einwegwerkzeug ausgeführt ist und das eine erste Stirnseite 2, eine zweite Stirnseite 3, eine an seinem Umfang ausgebildete Verzahnung 4 mit Zähnen 5, bei denen die der ersten Stirnseite 2 zugeordneten Stirnflächen 6 jeweils durch eine erste Schneidkante 9,10 begrenzt sind, sowie eine Koppeleinrichtung 14 zum Ankoppeln des Wälzschälwerkzeugs 1 an eine Werkzeugspindel einer Wälzschälmaschine umfasst. Um bei einem Wälzschälwerkzeug eine verlängerte Nutzung zu ermöglichen, sieht die Erfindung vor, dass das Wälzschälwerkzeug 1 die Grundform einer zylindrischen Scheibe aufweist, dass die der zweiten Stirnseite zugeordneten Stirnflächen der Zähne 5 durch jeweils eine zweite Schneidkante 12,13 begrenzt sind, und dass die Koppeleinrichtung 14 zum Gebrauch sowohl ein Ankoppeln des Wälzschälwerkzeugs 1 an die Werkzeugspindel derart ermöglicht, dass die seiner ersten Stirnseite 2 zugeordneten Schneidkanten 9,10 mit dem zu bearbeitenden Zahnrad in Eingriff kommen, als auch ein Ankoppeln des Wälzschälwerkzeugs 1 an die Werkzeugspindel derart ermöglicht, dass die seiner zweiten Stirnseite 3 zugeordneten Schneidkanten 12,13 mit dem zu bearbeitenden Zahnrad in Eingriff kommen.

Im Gebrauch wird das Wälzschälwerkzeug 1, wenn die ersten Schneidkanten 9,10 ihre Verschleißgrenze erreicht haben, gewendet und die Wälzschälbearbeitung mit demselben Wälzschälwerkzeug 1 fortgesetzt, bis auch die zweiten Schneidkanten 12,13 ihre Verschleißgrenze erreicht haben. Auf diese Weise ist die Dauer, über die ein erfindungsgemäßes Einweg-Wälzschälwerkzeug 1 genutzt werden kann, gegenüber konventionellen Einweg-Wälzschälwerkzeugen verdoppelt.

### BEZUGSZEICHEN

- 1: Wälzschälwerkzeug
- 2: erste Stirnseite des Wälzschälwerkzeugs 1
- 3: zweite Stirnseite des Wälzschälwerkzeugs 1
- 4: Außenverzahnung des Wälzschälwerkzeugs 1
- 5: Zähne der Außenverzahnung 4
- 6: der ersten Stirnseite 2 des Wälzschälwerkzeugs 1 zugeordnete Stirnseiten der Zähne 5
- 7,8: Zahnflanken der Zähne 5
- 9,10: erste Schneidkanten der Zähne 5
- 11: der zweiten Stirnseite des Wälzschälwerkzeugs 1 zugeordnete Stirnseite der Zähne 5
- 12,13: zweite Schneidkanten der Zähne 5
- 14: Koppeleinrichtung
- 15: zentrale Durchgangsöffnung des Wälzschälwerkzeugs 1
- 16,17: Mündungsbereiche der Durchgangsöffnung 15
- 18: Innenumfangsfläche der Durchgangsöffnung
- 19: Ausnehmung der Innenumfangsfläche 18 (Formelement)
- B: Zahnkopfbreite der Zähne 5
- Q: quer zur Achse L ausgerichtete Achse
- M: Mittelebene des Wälzschälwerkzeugs 1
- L: zentrale Achse des Wälzschälwerkzeugs 1

## Patentansprüche

1. Wälzschälwerkzeug, das als Einwegwerkzeug ausgeführt ist und das eine erste Stirnseite (2), eine zweite Stirnseite (3), eine an seinem Umfang ausgebildete Verzahnung (4) mit Zähnen (5), bei denen die der ersten Stirnseite (2) zugeordneten Stirnflächen (6) jeweils durch eine erste Schneidkante (9,10) begrenzt sind, welche im Gebrauch in spanabhebenden Eingriff mit einem zu bearbeitenden Zahnrad kommt, sowie eine Koppeleinrichtung (14) zum Ankoppeln des Wälzschälwerkzeugs (1) an eine Werkzeugspindel einer Wälzschälmaschine umfasst, **dadurch gekennzeichnet,**
**dass** das Wälzschälwerkzeug (1) die Grundform einer zylindrischen Scheibe aufweist, **dass** die der zweiten Stirnseite (3) zugeordneten Stirnflächen der Zähne (5) der Verzahnung (4) durch jeweils eine zweite Schneidkante (12,13) begrenzt sind, und **dass** die Koppeleinrichtung (14) zum Gebrauch sowohl ein Ankoppeln des Wälzschälwerkzeugs (1) an die Werkzeugspindel derart ermöglicht, dass im Gebrauch die seiner ersten Stirnseite (2) zugeordneten Schneidkanten (9,10) seiner Zähne (5) mit dem zu bearbeitenden Zahnrad in Eingriff kommen, als auch ein Ankoppeln des Wälzschälwerkzeugs (1) an die Werkzeugspindel derart ermöglicht, dass im Gebrauch die seiner zweiten Stirnseite (3) zugeordneten Schneidkanten (12,13) seiner Zähne (5) mit dem zu bearbeitenden Zahnrad in Eingriff kommen.

2. Wälzschälwerkzeug nach Anspruch 1, **dadurch**
**gekennzeichnet, dass** die Verzahnung (4) des Wälzschälwerkzeugs (1) als Geradverzahnung mit einem symmetrischen Profil ausgebildet ist.

3. Wälzschälwerkzeug nach einem der voranstehenden Ansprüche,
**dadurch gekennzeichnet, dass** die Zahnkopfbreite (B) der Zähne (5) seiner Verzahnung (4) 2 - 20 mm beträgt.

4. Wälzschälwerkzeug nach Anspruch 3, **dadurch**
**gekennzeichnet, dass** die Zahnkopfbreite (B) der Zähne (5) seiner Verzahnung 4 - 7 mm beträgt.

5. Wälzschälwerkzeug nach einem der voranstehenden Ansprüche,
**dadurch gekennzeichnet, dass** die Spanflächen der Schneidkanten (9,10;12,13) im Kegelmantelschliff geformt sind.

6. Wälzschälwerkzeug nach einem der voranstehenden Ansprüche,
**dadurch gekennzeichnet, dass** die Koppeleinrichtung (14) durch eine sich von der ersten Stirnseite (2) zur zweiten Stirnseite (3) erstreckende Durchgangsöffnung (15) gebildet ist.

7. Wälzschälwerkzeug nach Anspruch 6, **dadurch**
**gekennzeichnet, dass** ein der ersten Stirnseite (2) zugeordneter Mündungsbereich (16) bezogen auf eine normal zur Längsachse (L) des Wälzschälwerkzeugs (1) und bezogen auf die parallel zur Längsachse (L) des Wälzschälwerkzeugs (1) gemessene Breite (B) des Wälzschälwerkzeugs (1) mittig ausgerichtete Mittelebene (M) spiegelsymmetrisch zu einem der zweiten Stirnseite (3) zugeordneten Mündungsbereich (17) der Durchgangsöffnung (15) ausgebildet ist.

8. Wälzschälwerkzeug nach Anspruch 7, **dadurch**
**gekennzeichnet, dass** an einer Innenfläche der Durchgangsöffnung (15) ein Formelement (19) zum formschlüssigen und drehfesten Ankoppeln des Wälzschälwerkzeugs (1) an die Werkzeugspindel der jeweiligen Wälzschälmaschine vorgesehen ist.

9. Verfahren zum Wälzschälbearbeiten eines Zahnradrohlings, umfassend folgende Arbeitsschritte:
a) Bereitstellen eines gemäß einem der Ansprüche 1 bis 8 ausgebildeten Wälzschälwerkzeugs (1);
b) Ankoppeln des Wälzschälwerkzeugs (1) an eine Werkzeugspindel einer Wälzschälmaschine derart, dass bei der nachfolgend durchgeführten Wälzschälbearbeitung (Arbeitsschritt c)) die der ersten Stirnseite (2) des Wälzschälwerkzeugs (1) zugeordneten ersten Schneidkanten (9,10) des Wälzschälwerkzeugs (1) mit dem jeweils zu bearbeitenden Zahnradrohling in Eingriff kommen;
c) Wälzschälbearbeiten von Zahnradrohlingen bis die ersten Schneidkanten (9,10) des Wälzschälwerkzeugs (1) in Folge von Verschleiß einen Grenzzustand erreicht haben;
d) Abkoppeln des Wälzschälwerkzeugs (1) von der Werkzeugspindel;
e) Wenden des Wälzschälwerkzeug (1) und Ankoppeln des Wälzschälwerkzeugs (1) an die Werkzeugspindel der Wälzschälmaschine derart, dass bei der nachfolgend durchgeführten Wälzschälbearbeitung (Arbeitsschritt f)) die der zweiten Stirnseite (3) des Wälzschälwerkzeugs (1) zugeordneten zweiten Schneidkanten (12,13) des Wälzschälwerkzeugs (1) mit dem jeweils zu bearbeitenden Zahnradrohling in Eingriff kommen;
f) Wälzschälbearbeiten von Zahnradrohlingen bis die zweiten Schneidkanten (12,13) des Wälzschälwerkzeugs (1) in Folge von Verschleiß einen Grenzzustand erreicht haben.
